# EUROPÄISCHE PATENTSCHRIFT

(11) **EP 2 290 261 B1**
(45) Veröffentlichungstag und Bekanntmachung des Hinweises auf die Patenterteilung: **11.06.2014**
(21) Anmeldenummer: 10011395.0
(22) Anmeldetag: 03.03.2005
(51) Int. Cl.: F16H 57/02, G05D 7/06, F24F 13/14

(54) **Reduktionsgetriebe eines elektrischen Stellglieds**
Reduction gearing for an electric actuator
Engranage réducteur pour un actionneur électrique

(30) Priorität: 19.03.2004 CH 4652004
(43) Veröffentlichungstag der Anmeldung: 02.03.2011
(62) Teilanmeldung aus: 05706545.0
(73) Patentinhaber: Belimo Holding AG, 8340 Hinwil (CH)
(72) Erfinder: Furrer, Andreas, 8620 Wetzikon (CH)
(74) Vertreter: Roshardt, Werner Alfred

(56) Entgegenhaltungen:
- EP-A- 0 617 213
- EP-A- 1 048 905
- CH-A5- 614 507
- DE-A1- 2 928 705
- DE-A1- 3 710 864
- DE-A1- 19 632 669
- US-A- 5 169 121
- US-A- 6 098 957

## Beschreibung

Die Erfindung bezieht sich auf ein Reduktionsgetriebe eines elektrisch betriebenen Stellglieds zur Regelung eines Gas- oder Flüssigkeitsvolumenstroms, insbesondere auf dem Gebiet HLK, Brand- oder Rauchschutz, wobei das Reduktionsgetriebe ein Primärgetriebe mit wenigstens einem Antriebsmotor und ein Sekundärgetriebe mit einem Abtrieb umfasst, wobei eine Selbsthemmung integriert ist.

Elektrische Stellantriebe für die Motorisierung von Stellgliedern in Heizungs-, Lüftungs- und Klimaanlagen (HLK-Anlagen) werden seit mehr als 30 Jahren hergestellt. HLK-Stellglieder gewährleisten eine wirtschaftliche Volumenstromregelung von Gasen oder Flüssigkeiten, insbesondere von Luft und Wasser. Als kompakte Einheit umfassen sie nicht nur den Antrieb, sondern auch Druckfühler und Regler, alles in einem Gerät vereint.

Belüftungssysteme werden zunehmend in Gebäuden, insbesondere Wohn-, Büro-, Gewerbe- und Industriebauten, eingesetzt, in der Regel kombiniert mit Brand- und Rauchschutzeinrichtungen. In Belüftungsanlagen spielt die Volumenstromregelung mit schwenkbaren Luftklappen eine wesentliche Rolle. Der Volumenstrom wird mit einem geeigneten Messinstrument gemessen, beispielsweise mit dem als kompakte Einheit von Antrieb, Druckfühler und Regler ausgebildeten NMV-D2M der Belimo Automation AG, CH-8340 Hinwil, und die Messwerte an eine Elektronik weitergegeben.

In modernen Haustechnikanlagen stehen heute neben Wechselstrom- immer mehr Gleichstromgeräte im Einsatz. Eine DC24V-Stromversorgung kann direkt bezogen werden, eine separate Spannungsversorgung mit Trafo ist nicht mehr notwendig.

Zum Bewegen einer Klappe in einem Belüftungssystem oder eines Kugelhahns in einem Wasserleitungssystem müssen verhältnismässig schwache Motoren grossflächige oder grossvolumige Regelorgane betätigen. Eine präzise und stabile Verstellung ist nur mit einer überaus starken Untersetzung möglich. Für das Schwenken einer Klappe oder das Drehen eines Kugelhahns um einen spitzen oder rechten Winkel sind zahlreiche Umdrehungen der Welle des Elektromotors notwendig. Die Elektronik erarbeitet die Steuersignale und steuert den Elektromotor an.

In der CH 614 507 A5 wird ein Stellantrieb mit einem Elektromotor und einem Getriebe für eine Belüftungsanlage beschrieben. Er ist auf eine Klappen- beziehungsweise Ventilachse aufsteckbar. Das letzte gezahnte Getriebeelement ist als Zahnsegment ausgebildet und mit einer in einer Grundplatte des Stellantriebs drehbar radial gelagerten, axial gehalterten Hohlachse versehen. Der Elektromotor kann nach dem Erreichen von Endanschlägen, welche den Drehwinkel des Zahnsegments beschränken, eingeschaltet bleiben. Der beschriebene Stellantrieb findet Verwendung bei Luftklappen, Mischhähnen und Drosselklappen in Heizungs- und Lüftungsanlagen. Das beschriebene Reduktions- bzw. Untersetzungsgetriebe ist apparatespezifisch.

In der US 6,098,957 wird ein elektromechanischer Drehmomentbegrenzer für einen Aktuator und Ventile in einem Heizungs-, Kühlungs- oder Ventilationssystems beschrieben. Die Vorrichtung umfasst ein mehrstufiges Reduktionsgetriebe und einen mit Gleichstrom oder Wechselstrom betriebenen Antriebsmotor. An der Abtriebsachse ist ein Schneckengewinde angebracht, welches über einen in das Schneckengewinde eingreifenden Hebelmechanismus ein Kugelventil antreibt. Des Weiteren ist an der Abtriebsachse ein Drehmomentbegrenzer mit einer Selbsthemmung angebracht, welcher eine in Axialrichtung spannbare Schraubenfeder beinhaltet. Zur Ansteuerung des Antriebsmotors ist ein Sensor angeordnet, welcher die axiale Verschiebung der Antriebswelle misst.

Der Erfindung liegt die Aufgabe zugrunde, ein Reduktionsgetriebe der eingangs genannten Art zu schaffen, welches flexibler einsetzbar ist, die Herstellungs- und Lagerhaltungskosten vermindert, aber die gleiche Leistung zu etwa gleichen Betriebskosten erbringt.

Die Aufgabe wird erfindungsgemäss durch die Merkmale des Anspruchs 1 gelöst. Spezielle und weiterbildenden Ausführungsformen der Erfindung sind Gegenstand von abhängigen Patentansprüchen.

Die beliebige Kombinierbarkeit von modular ausgebildeten Primär- und Sekundärgetrieben erlaubt nach den Regeln der Kombinatorik folgende Anzahl K von Kombinationen:
- K =: n · m
- n =: Anzahl Primärgetriebe
- m =: Anzahl Sekundärgetriebe

So können beispielsweise mit 6 Primärgetrieben und 6 Sekundärgetrieben 36 Kombinationen von Reduktionsgetrieben für elektrische Stellglieder zusammengesetzt werden, mit 3 Primärgetrieben und 10 Sekundärgetrieben 30 Kombinationen.

Eine Selbsthemmung im vorliegenden Sinne tritt ein, wenn ein Betätigungsorgan, d.h. eine Klappe, ein Ventil, insbesondere ein Kugelhahn oder ein Hubventil, die Endposition erreicht hat und der Elektromotor ausgeschaltet ist. In dieser Situation muss das Getriebe positionsstabil bleiben und darf sich nicht verschieben, wenn der Gas- oder Flüssigkeitsvolumenstrom unterschiedlich fliesst. Sinngemäss entspricht diese Situation einer selbsthemmenden Schraube.

Die Selbsthemmung zwischen dem Primär- und Sekundärgetriebe kann eine nicht schaltbare oder schaltbare Kupplung sein.

Die Selbsthemmung ist als drehmomentbegrenzende Kupplung, insbesondere als Reibkupplung oder andere Bremskupplung, ausgebildet. In Ruhelage ist die in Axialrichtung elastische Selbsthemmung entsprechend der zu erzeugenden Reibkraft zusammengedrückt, die drehsteife Selbsthemmung ist dagegen bezüglich eines Drehmoments entspannt. Beim Einschalten des Antriebsmotors wird die drehsteife Selbsthemmung gespannt, schon nach einem Drehen um einen Winkel von wenigen Grad beginnt die Selbsthemmung am Ort des kleinsten Widerstandes zu schleifen, bis der Antriebsmotor ausgeschaltet wird, dann tritt sofort eine Blockierung durch die Selbsthemmung ein. Anstelle einer mechanischen Reibkupplung kann jede andere, gleichwirkende Kupplung ausgebildet sein, insbesondere eine entsprechende Magnetkupplung. Der Ausdruck "schleifen" wird einfachheitshalber auch für eine Magnetkupplung verwendet.

Nach einer zweiten Variante kann die Selbsthemmung bezüglich der Axialrichtung auf beiden Seiten eine Reibfläche haben. Zweckmässig ist der Widerstand gegen ein Drehmoment nicht gleich gross, sondern unterschiedlich. Dies wird erreicht durch unterschiedlich grosse Reibradien von der Drehachse der betreffenden Zahnräder. Aus dem Hebelgesetz kann abgeleitet werden, dass bei gleichem Reibungskoeffizienten und gleichem Druck die Reibfläche mit dem kleineren Radius r vor der Reibfläche mit dem grösseren Radius R zu schleifen beginnt. Entsprechendes gilt - wie bereits angetönt - für eine Magnetkupplung.

In der Praxis ist der grössere Reibradius R meist dem Primärgetriebe zugeordnet, der kleinere Reibradius r einem Gehäuseteil. Ohne weitere Massnahmen beginnt die Selbsthemmung auf dem Gehäuseteil zu schleifen.

Nach einer weiteren Variante der Erfindung ist die Selbsthemmung als fremdbetätigte schaltbare Kupplung ausgebildet. Zu diesem Zweck können im Bereich des kleineren Reibradius r Bolzen oder Nocken zum Arretieren der Selbsthemmung eingeschoben werden. Nun beginnt die Selbsthemmung im Bereich des grösseren Reibradius R zu schleifen, wenn der Antriebsmotor des Primärgetriebes eingeschaltet ist. Dieses Umschalten erfolgt, wenn ein grösserer Widerstand erforderlich ist.

Nach einer weiteren Ausführungsform kann das erste freilaufende Zahnrad mit dem Primärgetriebe fest mit der Selbsthemmung verbunden sein und ein Gehäuseteil im Bereich eines kleinen und eines grossen Reibradius Auflageflächen für die Selbsthemmung, jedoch auf verschiedenem Niveau, haben. Die eine Reibfläche befindet sich auf einem axial verschiebbaren Hebebolzen, die andere Reibfläche ist konzentrisch ringförmig angeordnet. Mit dem Hebebolzen kann z.B. ein Federteller von der äusseren, ringförmigen Reibfläche abgehoben werden und liegt nun auf dem Bolzen selbst auf. Wegen der verschiedenen Reibradien R, r wird dadurch die Selbsthemmung wesentlich geringer.

Die Selbsthemmung umfasst bevorzugt eine in Axialrichtung der Zahnräder spannbare, drehsteife Hemmfeder, welche vorzugsweise als Kegeldruckfeder, Schraubenfeder oder Blattfeder ausgebildet ist. Die unterschiedlichen Reibradien R, r werden durch verschieden lange Federschenkel erreicht.

Die Selbsthemmung, d.h. der Friktionswiderstand, kann durch Erhöhung des Drucks in axialer Richtung erhöht werden. Der Druck wird bei beiden Radien R, r gleichermassen erhöht, wirkt sich jedoch wegen des verschieden langen Radius bzw. Hebelarms unterschiedlich aus.

Wie erwähnt sind das Primär- und das Sekundärgetriebe entkoppelbar, damit jedes für sich frei drehen kann. Dies erfolgt durch Entkoppeln eines der Selbsthemmung anliegenden Zahnrades, vorzugsweise durch Drücken einer Ausrasttaste.

Für eine Stellungsrückmeldung kann beispielsweise ein Potentiometer eingesetzt werden, welches in das in Richtung des Abtriebs letzte Zahnrad einkoppelbar ist. Zur Betätigung des Primär- und damit auch des Sekundärgetriebes wird ein Antriebsmotor an sich bekannter Bauart eingesetzt, insbesondere ein DC-Motor, ein bürstenloser DC-Motor, ein sensorloser DC-Motor oder ein Synchronmotor haben sich im Einsatz bewährt.

Mit Blick auf die Betriebssicherheit kann ein Energiespeicher eingebaut werden, damit bei einem Motordefekt das Stellorgan dennoch betätigt werden kann. Vorzugsweise ist der im Primärgetriebe angeordnete Energiespeicher eine mechanische Feder, eine Batterie oder ein Kondensator.

Das Sekundärgetriebe wird - ebenfalls mit an sich bekannten Mitteln - mit einer Antriebswelle einer Klappe, eines Kugelhahns oder eines Linearmotors für ein Hubventil, insbesondere ein Kegelventil, verbunden, zweckmässig mittels eines Koppelmoduls.

Die Vorteile der vorliegenden Erfindung können kurz wie folgt zusammengefasst werden:
- Durch den modularen Aufbau des Reduktionsgetriebes aus Primärgetriebe, Sekundärgetriebe und Selbsthemmung kann bei geringer Baugruppenanzahl eine hohe Gerätevielfalt erzielt werden.
- Auch die weiteren Bestandteile des Stellglieds können modular ausgebildet sein, insbesondere das Sensor- und COM-Modul, die Elektronik und das Gehäuse, wodurch der Vorteil einer hohen Gerätevielfalt bei geringer Baugruppenanzahl noch erhöht wird.
- Die hohe Gerätevielfalt wirkt sich auch zur Abdeckung von unterschiedlichsten Anwendungen positiv aus.
- Die Primäreinheit ist an die Elektronikplattform anpassbar (Grösse, Motorentechnologie).

Alle Vorteile der zu hoher Entwicklungsreife gebrachten elektrischen Stellglieder bleiben erhalten.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine Ansicht eines modular aufgebauten Primär- und Sekundärgetriebes mit einer Selbsthemmung,
- Fig. 2 eine Selbsthemmung mit einer kegelförmigen Hemmfeder,
- Fig. 3 eine Selbsthemmung mit beiden Reibflächen in Richtung eines Gehäuseteils,
- Fig. 4 eine Draufsicht auf eine Federführung,
- Fig. 5 eine Draufsicht auf einen Gehäuseteil mit einer inneren Reibfläche, und
- Fig. 6 eine Draufsicht auf ein Stirnrad eines Primärgetriebes mit einer äusseren Reibfläche.

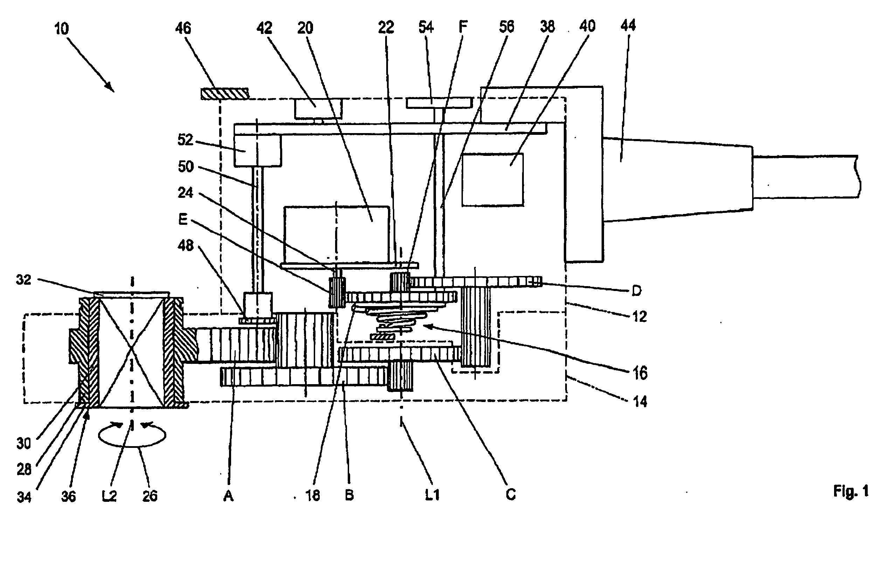

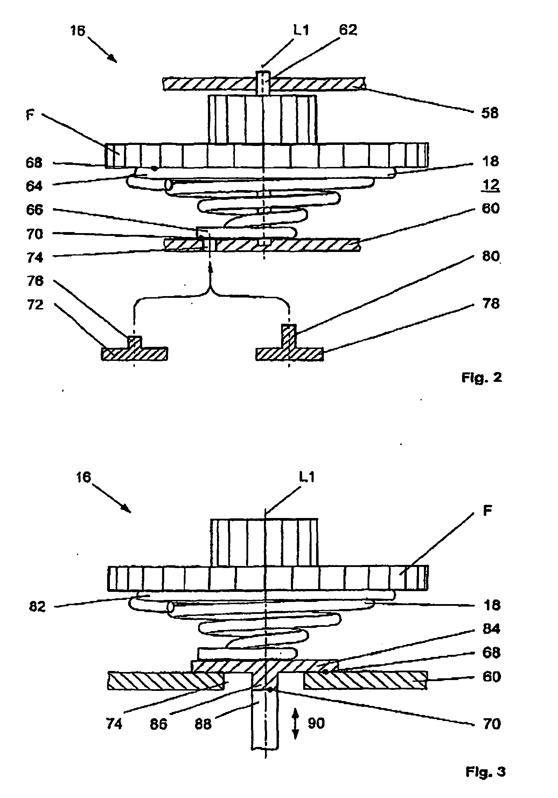

Das in Fig. 1 dargestellte Reduktionsgetriebe 10, auch Untersetzungsgetriebe genannt, umfasst im wesentlichen ein Primärgetriebe 12 und ein Sekundärgetriebe 14, weiche modular ausgebildet und lösbar miteinander verbunden sind. Zwischen einem ersten freidrehenden Stirnrad F und einem Gehäuseteil 60 (Fig. 2) ist eine Selbsthemmung 16 angeordnet, welche vorliegend eine drehsteife Hemmfeder 18 aus Federstahl umfasst.

Ein verhältnismässig leistungsschwacher Antriebsmotor 20, vorliegend ein DC-Motor, welcher auf einem Support 22 abgestützt ist, treibt über eine Motorwelle 24 ein längliches Zahnrad E an, welches kurz E-Rad genannt wird. Dieses steht in Eingriff mit einem schmalen Stirnrad grossen Durchmessers, welche mit einem Zahnrad kleinen Durchmessers, einem Ritzel, verbunden oder einstückig ausgebildet ist (F-Rad). Schliesslich ist noch ein weiteres Untersetzungs-Zahnrad, das D-Rad, dem Primärgetriebe 12 zugeordnet.

Ein weiteres Untersetzungs-Stirnrad, das mit dem F-Rad koaxiale C-Rad, ist dem Sekundärgetriebe 14 zugeordnet, die gemeinsame Längsachse L₁ ist auch Längsachse der Hemmfeder 18. Über ein letztes axialsymmetrisches Untersetzungs-Stirnrad - das B-Rad - wird ein Segment angetrieben, welches auch als A-Rad bezeichnet wird.

Alle Zahnräder A bis F haben parallele Achsen, z.B. L₁, L₂, sind nach üblicher Bauart, z.B. Stirnzahnräder, Schneckenzahnräder, Winkelzahnräder, und Verzahnungsgeometrie ausgebildet, sie bestehen aus einem Metall und/oder einem abriebfesten Kunststoff hoher mechanischer Festigkeit. Durch das hohe Untersetzungsverhältnis ist ein verhältnismässig schwacher elektrischer Antriebsmotor 20 hinreichend stark. Der Schwenkwinkel in der einen oder anderen Richtung, mit einem Doppelpfeil 26 dargestellt, kann präzis eingestellt werden. Der maximale Schwenkwinkel liegt in der Praxis bei 90°, bezüglich der Längsachse L₂ liegt der Schwenkbereich insbesondere zwischen 30 bis 90°.

Das A-Rad ist über ein Koppelmodul 28 kraft- und/oder formschlüssig mit einer Hohlwelle 30 verbunden, welche eine Klappe, einen Kugelhahn oder einen Linearmotor betätigt. Die Längsachse L₂ verläuft parallel zur Längsachse L₁. Die Hohlwelle 30 ist über ein oberes und unteres Lager 32, 34 im in Fig. 2 angedeuteten Gehäuse 58, 60 eines modular aufgebauten Stellglieds schwenkbar gelagert und wird auch als Abtrieb 36 bezeichnet.

Für die Ausbildung von Stellgliedern wird beispielsweise auf den Firmenprospekt NEWS VAV NMV-D2M der Firma Belimo Automation AG, CH-8340 Hinwil, verwiesen.

Im Gehäuse 60 des Primärgetriebes 12 ist eine ebenfalls modulartige Elektronik 38 angeordnet, welche u.a. die notwendigen Steuerbefehle an den Antriebsmotor 20 und einen Energiespeicher 40 für den Notbetrieb erteilt. Diese Befehle können auch über ein manuell betätigbares Bedienelement 42 eingegeben werden. Am bereits erwähnten Gehäuse 58, 60 des Primärgetriebes 12 ist auch ein elektrischer Anschluss 44 angebracht, welcher insbesondere den Motor 20 und den Energiespeicher 40 versorgt. Der Modulaufbau erlaubt u.a. auch, dass mehrere Sekundärgetriebe 14 mit demselben Primärgetriebe 12 antreibbar sind.

Über ein Stirnrad 48, welches in das Ritzel des Zahnrads B eingreift, wird die Rotationsbewegung über eine Welle 50 zu einem Potentiometer 52 für die Stellungsrückmeldung an die Elektronik 38 übertragen.

Schliesslich ist eine manuell betätigbare Ausrasttaste 54 ausgebildet, welche manuell nach unten gedrückt werden kann. Dabei wird das F-Rad entlang der Achse L₁ nach unten verschoben, was dank der Hemmfeder 18 möglich ist, bis das Ritzel des F-Rades aus dem D-Rad ausrastet. Dabei entsteht für das Primärgetriebe 12 und das Sekundärgetriebe 14 ein Freilauf ohne Demontage der Module. Dass auch das Stirnrad 48 des Potentiometers 52 mitgedreht wird, wenn das Sekundärgetriebe 14 im Freilauf betätigt wird, ist wegen des geringen Widerstandes ohne Bedeutung. Selbstverständlich verläuft der Betätigungsstift 56 der Ausrasttaste 54 ausserhalb des D-Rades.

Von erfindungswesentlicher Bedeutung ist der modulartige Aufbau des Reduktionsgetriebes 10 aus dem Primärgetriebe 12 und dem Sekundärgetriebe 14, aber auch der Einbau einer Selbsthemmung 16. Der Modulaufbau des Primärgetriebes 12 und des Sekundärgetriebes 14 ist so gelöst, dass die beiden mit lösbaren Befestigungsmitteln, beispielsweise Schrauben oder einem Schnellverschluss, verbundenen Module 12, 14 schnell und einfach voneinander getrennt werden können. Dabei wird das Ritzel des D-Rades vom C-Rad ausgerastet. Falls ein Potentiometer 52 mit einem Stirnrad 48 angeordnet ist, wird auch das letztere vom Ritzel des B-Rades abgehoben.

Weiter ist von wesentlicher Bedeutung, dass zwischen dem F-Rad und einem Gehäuseteil 60 eine integrierte Selbsthemmung 16 eingebaut ist. Die drehsteife Hemmfeder 18 verhindert bei richtiger Federstärke und Einstellung, dass sich das zweiteilige Reduktionsgetriebe 10 aus der festgelegten Arbeitsstellung verschieben kann, vorliegend durch eine hinreichende Reibkraft zwischen den Schenkeln der Hemmfeder 18 und wenigstens einer Innenfläche des C-Rades und des Gehäuseteils 60. Details sind aus den Fig. 2, 3, 5 und 6 ersichtlich.

Fig. 2 zeigt eine erste detaillierte Ausführungsform einer Selbsthemmung 16 mit einer kegelförmigen Hemmfeder 18 aus Federstahl im Bereich des Primärgetriebes 12. In zwei Gehäuseteilen 58, 60 ist die Zahnradachse 62 des F-Rades gehaltert, welche gleichzeitig Federführung für die Hemmfeder 18 ist. Es ist ein oberer längerer Federschenkel 64 und ein unterer kürzerer Federschenkel 66 ausgebildet. In Richtung der Achse L₁ ist die Hemmfeder 18 gespannt, wodurch die beiden Federschenkel 66, 64 auf das F-Rad bzw. den Gehäuseteil 60 gedrückt werden, offensichtlich beide mit gleicher Kraft. Beide Federschenkel 66, 64 bilden je eine Reibfläche 68, 70. Wenn das E-Rad des Antriebsmotors 20 (Fig.1) ein Drehmoment auf das F-Rad ausübt, schleift die Hemmfeder 18 mit dem kürzeren Federschenkel 66 auf der Reibfläche 70. Dies ist mit Blick auf das Hebelgesetz offensichtlich.

In Fig. 2 werden zwei Varianten angedeutet. Eine Bohrung 74 im Gehäuseteil 60 kann nach einer ersten Variante mit einem kurzen Schaltnocken 76 eines Verschlussteils 72, welcher höchstens der Dicke des Gehäuseteils 60 entspricht, verschlossen werden. Die Reibkraft der Selbsthemmung 16 bzw. der Hemmfeder 18 kann erhöht werden, indem die Bohrung 74 mit einem langen Schaltnocken 80 eines Verschlussteils 78 verschlossen wird. Dieser übersteht den Gehäuseteil 60 und blockiert den kürzeren Federschenkel 66. Bei einer Betätigung des Primärgetriebes 12 schlägt der kürzere Federschenkel 66 am langen Schaltnocken 80 an und kann nicht weiterdrehen. Deshalb muss der längere Federschenkel 64 auf den Reibfläche 68 drehen, ein höherer Widerstand als bei freier Drehbarkeit beider Federschenkel 64, 66 muss überwunden werden. Dank der schaltbaren Selbsthemmung 16 stehen zwei unterschiedliche Selbsthemmkräfte zur Verfügung.

Offensichtlich kann Fig. 2 auch invers ausgebildet sein, indem der kürzere Federschenkel 66 auf dem Rad F, der längere Federschenkel 64 auf dem Gehäuseteil 60 aufliegt. Eine schaltbare Selbsthemmung 16 ist auch so möglich. Weiter kann die Selbsthemmung geändert werden, indem beispielsweise Distanzhalter zwischen das F-Rad und den Gehäuseteil 58 eingelegt werden. Beide Federschenkel 64, 66 werden dadurch mit grösserer oder kleinerer Kraft auf das F-Rad bzw. auf den Gehäuseteil 60 gedrückt, was den Reibwiderstand beeinflusst. Schliesslich kann die Selbsthemmung dadurch geändert werden, dass eine oder beide Reibflächen 68, 70 beschichtet und/oder mechanisch aufgerauht werden, z.B. durch eine Riffelung.

Die Selbsthemmung 16 könnte im Prinzip auch bei einem andern Zahnrad als dem F-Rad angebracht sein, die Wirkung ist jedoch umso grösser, je näher sie dem E-Rad des Antriebsmotors 20 benachbart ist.

In Fig. 3 ist eine Selbsthemmung dargestellt, bei welcher die schraubenlinienförmig ausgebildete Hemmfeder 18 am Rad F befestigt ist. Dies kann beispielsweise mit einem Federring 82 erfolgen. Im unteren Bereich ist die Hemmfeder 18 an einem Federteller 84 befestigt, welcher im Bereich der Bohrung 74 frei auf dem Gehäuseteil 60 aufliegt und die äussere Reibfläche 68 festlegt. Im zentralen Bereich weist der Federteller 84 einen nach unten abstehenden koaxialen Zapfen 86 auf. Ein ebenfalls bezüglich der Längsachse L₁ koaxialer Hebebolzen 88 ist in Richtung des Doppelpfeils 90 heb- und absenkbar, beispielsweise mittels eines nicht dargestellten Excenterhebels. So kann der Federteller 84 vom Gehäuseteil 60 abgehoben werden, die innere Reibfläche 70 wird nun vom Zapfen 86 und Hebebolzen 88 gebildet. Beim Drehen des Rades F dreht die Hemmfeder 18 mit, ebenfalls der Federteller 84. Je nach Position des Hebebolzens 88 ist der Reibwiderstand grösser oder kleiner. Diese Selbsthemmung 16 ist ebenfalls schaltbar.

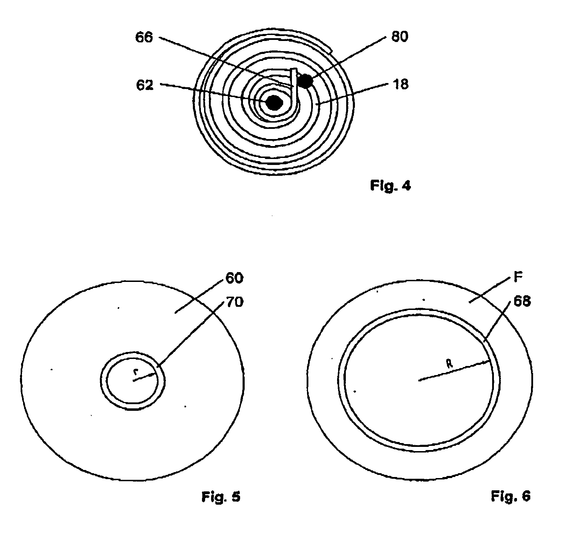

Fig. 4 veranschaulicht die Umschaltung der Selbsthemmung 16 von Fig. 2. Die Hemmfeder 18 ist drehbar um die Federführung, welche die Zahnradachse 62 des Rades F ist, geschlungen. Beim Betätigen des Rades F (Fig. 2) schlägt der kürzere Federschenkel 66 am langen Schaltnocken 80 an und blockiert so die Drehung der Hemmfeder 18, welche dabei dank ihrer drehsteifen Ausbildung nur um wenige Grad deformiert wird. Mit Blick auf die grosse Untersetzung fällt deshalb ein Zurückfedern beim Ausschalten des Antriebsmotors 20 nicht ins Gewicht.

Ebenfalls mit Blick auf Fig. 2 zeigt Fig. 5 eine ringförmige innere Reibfläche 70 mit einem kleineren Radius r auf dem Gehäuseteil 60, von welchem ein scheibenförmiger Ausschnitt gezeigt ist.

Fig. 6 zeigt eine ebenfalls ringförmige äussere Reibfläche 68 auf dem Rad F, welche einen grösseren Radius R hat.

## Patentansprüche

1. Reduktionsgetriebe (10) für ein elektrisch betriebenes Stellglied zur Regelung eines Gas- oder Flüsslgkeitsvolomenstroms (98), insbesondere auf dem Gebiet Heizung, Lüftung und Klima, Brand- oder Rauchschutz, wobei das Reduktionsgetriebe (10) ein Primärgetriebe (12) mit wenigstens einem Antriebsmotor (20) und ein Sekundärgetriebe (14) mit einem Abtrieb (36) umfasst, wobei eine Selbsthemmung (16), die als drehmomentbegrenzende Kupplung ausgestaltet ist, integriert ist, **dadurch gekennzeichnet, dass** das Primärgetriebe (12) und das Sekundärgetriebe (14) als Getriebemodule lösbar miteinander verbunden sind und dass ein mit der Selbsthemmung in Eingriff stehendes Zahnrad (F) entkoppelbar ist, um einen Freilauf des Primärgetriebes (12) und des Sekundärgetriebes (14) ohne Demontage der Getriebemodule zu ermöglichen.

2. Reduktionsgetriebe (10) nach Anspruch 1, **dadurch gekennzeichnet, dass** zum Entkoppeln des mit der Selbsthemmung in Eingriff stehenden Zahnrades (F) eine Ausrasttaste (54) auf dem Gehäusedeckel (46) vorgesehen ist.

3. Reduktionsgetriebe (10) nach Anspruch 1 oder 2, **dadurch gekennzeichnet, dass** die Getriebemodule (12,14) austauschbar sind, wobei Insbesondere für dasselbe Primärgetriebe (12) verschiedene Sekundärgetriebe (14) einsetzbar sind.

4. Reduktionsgetriebe (10) nach einem der Ansprüche 1 bis 3, **dadurch gekennzeichnet, dass** die Selbsthemmung (16) als Reibkupplung ausgebildet ist.

5. Reduktionsgetriebe (10) nach einem der Ansprüche 1 bis 4, **dadurch gekennzeichnet, dass** die Selbsthemmung (16) als mechanische Reibkupplung, Magnetkupplung oder andere Bremskupplung ausgebildet ist.

6. Reduktionsgetriebe (10) nach einem der Ansprüche 1 bis 5, **dadurch gekennzeichnet, dass** die Selbsthemmung (16) eine äussere Reibfläche (68) mit einem grossen Radius (R) und eine innere Reibfläche (70) mit einem kleinen Radius (r) aufweist, wodurch mit derselben Einrichtung zur Selbsthemmung unterschiedliche Widerstandswerte gegen ein Drehmoment einstellbar sind.

7. Reduktionsgetriebe (10) nach Anspruch 6, **dadurch gekennzeichnet, dass** das mit der Selbsthemmung (16) im Eingriff stehende Zahnrad (F) ein Stirnrad ist und dass die äussere Reibfläche (68) an dem Stirnrad (F) des Primärgetriebes (12), die innere Reibfläche (70) an einem Gehäuseteil (60), oder umgekehrt, ausgebildet ist.

8. Reduktionsgetriebe (10) nach einem der Ansprüche 1 bis 7, **dadurch gekennzeichnet, dass** die Selbsthemmung (16) als schaltbare Kupplung ausgebildet ist.

9. Reduktionsgetriebe (10) nach Anspruch 6 und 8, **dadurch gekennzeichnet, dass** die Selbsthemmung (16) im Bereich der inneren Reibfläche (70) mit einem überstehenden Schaltnocken (80) arretierbar ist.

10. Reduktionsgetriebe (10) nach Anspruch 6 und 8, **dadurch gekennzeichnet, dass** das mit der Selbsthemmung (16) im Eingriff stehende Zahnrad (F) ein Stirnrad ist, welches fest mit der Selbsthemmung (16) verbunden ist, dass das Stirnrad (F) eine Längsachse (L1) aufweist und dass ein Gehäuseteil (60) die ringförmige äussere Reibfläche (68) mit dem grossen Radius (R) und ein in Richtung der Längsachse (L1) des Stirnrads (F) verstelibarer Hebebolzen (88) die innere Reibfläche (70) bildet.

11. Reduktionsgetriebe (10) nach Anspruch 7 oder 10, **dadurch gekennzeichnet, dass** die Selbsthemmung (16) eine in Richtung der Längsachse (L1) des Stirnrads (F) spannbare, drehsteife Hemmfeder (18) umfasst, welche vorzugsweise als Kegeidruckfeder, Schraubenfeder oder Blattfeder ausgebildet ist.

12. Reduktionsgetriebe (10) nach einem der Ansprüche 1 bis 11, **dadurch gekennzeichnet, dass** ein Potentiometer (52) für eine Stellungsrückmeldung in ein Ritzel des in Richtung des Abtriebs (36) letzten Zahnrads (B) über ein Stirnrad (48) mit einer Welle (50) einkoppelbar ist.

13. Reduktionsgetriebe (10) nach einem der Ansprüche 1 bis 12, **dadurch gekennzeichnet, dass** der Antriebsmotor (20) als DC-Motor, bürstenloser DC-Motor, sensorloser DC-Motor oder Synchronmotor ausgebildet ist.

14. Reduktionsgetriebe (10) nach einem der Ansprüche 1 bis 13, **dadurch gekennzeichnet, dass** mit Blick auf die Betriebssicherheit ein Energiespeicher (40) eingebaut ist. vorzugsweise eine mechanische Feder, eine Batterie oder ein Kondensator im Gehäuse (46) des Primärgetriebes (12).

15. Reduktionsgetriebe (10) nach einem der Ansprüche 1 bis 14, **dadurch gekennzeichnet, dass** das Sekundärgetriebe (14) mit einer Hohlwelle (30) zum Antrieb einer Klappe, eines Kugelhahns oder eines Linearmotors für ein Hubventil (94), insbesondere ein Kegelventil, gekoppelt ist.

## Claims

1. Reduction gearing (10) for an electrically operated actuator to control a gaseous or liquid volume flow (98), in particular in the field of heating, ventilation and air conditioning, fire or smoke protection, wherein the reduction gearing (10) comprises a primary gearing (12) with at least one drive motor (20) and a secondary gearing (14) with an output drive (36), wherein a self-lock (16), which is formed as a torque-limiting coupling, is integrated, **characterised in that** the primary gearing (12) and the secondary gearing (14) are connected together detachably as gear modules, and **in that** a gear wheel (F) in engagement with the self-lock can be decoupled, in order to make a freewheel of the primary gearing (12) and the secondary gearing (14) possible without dismantling of the gearing modules.

2. Reduction gearing (10) according to Claim 1, **characterized in that** a disengagement button (54) is provided on the housing cover (46) in order to decouple the gear wheel (F) which is in engagement with the self-lock.

3. Reduction gearing (10) according to Claim 1 or 2, **characterised in that** the gear modules (12, 14) are exchangeable, where, in particular, for the same primary gearing (12) different secondary gearings (14) can be used.

4. Reduction gearing (10) according to any of Claims 1 to 3, **characterised in that** the self-lock (16) is formed as a friction coupling.

5. Reduction gearing (10) according to any of Claims 1 to 4, **characterised in that** the self-lock (16) is formed as a mechanical friction coupling, magnetic coupling or other brake coupling.

6. Reduction gearing (10) according to any of Claims 1 to 5, **characterised in that** the self-lock (16) has an outer friction surface (68) with a large radius (R) and an inner friction surface (70) with a small radius (r), whereby with the same self-lock device, different torque resistance values can be set.

7. Reduction gearing (10) according to Claim 6, **characterised in that** the gear wheel (F) in engagement with the self-lock (16) is a spur wheel and **in that** the outer friction surface (68) is formed on the spur wheel (F) of the primary gearing (12), and the inner friction surface (70) on a housing part (60), or conversely.

8. Reduction gearing (10) according to any of Claims 1 to 7, **characterised in that** the self-lock (16) is formed as a switchable coupling.

9. Reduction gearing (10) according to Claims 6 and 8, **characterised in that** the self-lock (16) in the area of the inner friction surface (70) can be locked with a protruding trip cam (80).

10. Reduction gearing (10) according to Claims 6 and 8, **characterised in that** the gear wheel (F) in engagement with the self-lock (16) is a spur wheel which is firmly connected with the self-lock (16), **in that** the spur wheel (F) has a longitudinal axis (L1) and **in that** a housing part (60) forms the annular outer friction surface (68) with the large radius (R) and a lifting bolt (88) which is adjustable in the direction of the longitudinal axis (L1) of the spur wheel (F) forms the inner friction surface (70).

11. Reduction gearing (10) according to Claim 7 or 10, **characterised in that** the self-lock (16) comprises a rotationally stiff locking spring (18) which can be tensioned in the direction of the longitudinal axis (L1) of the spur wheel (F) and is preferably formed as a conical pressure spring, coil spring or leaf spring.

12. Reduction gearing (10) according to any of Claims 1 to 11, **characterised in that** a potentiometer (52) for a position feedback can be coupled into a pinion of the last gear wheel (B) in the direction of the output drive (36) above a spur gear (48) via a shaft (50).

13. Reduction gearing (10) according to any of Claims 1 to 12, **characterised in that** the drive motor (20) is formed as a DC motor, brushless DC motor, sensorless DC motor or synchronous motor.

14. Reduction gearing (10) according to any of Claims 1 to 13, **characterised in that**, with a view to the operating safety, an energy accumulator (40) is integrated, preferably a mechanical spring, a battery or a condenser, in a housing (46) of the primary gearing (12).

15. Reduction gearing (10) according to any of Claims 1 to 14, **characterised in that** the secondary gearing (14) is coupled with a hollow shaft (30) to drive a flap, a tap or a linear motor for a lift valve (94), in particular a conical valve.

## Revendications

1. Engrenage réducteur (10) pour un actionneur à commande électrique pour la régulation d'un courant volumique gazeux ou liquide (98), en particulier dans le domaine du chauffage, de la ventilation et de la climatisation, de la protection contre le feu ou la fumée, l'engrenage réducteur (10) comprenant un engrenage primaire (12) avec au moins un moteur d'entraînement (20) et un engrenage secondaire (14) avec une prise de force (36), un autoblocage (16) réalisé sous forme d'embrayage limiteur de couple étant intégré, **caractérisé en ce que** l'engrenage primaire (12) et l'engrenage secondaire (14) sont connectés entre eux en tant que modules d'engrenage de manière séparable, et **en ce qu'**une roue dentée (F) en prise avec l'autoblocage peut être désaccouplée, afin de permettre une roue libre de l'engrenage primaire (12) et de l'engrenage secondaire (14) sans démontage des modules d'engrenage.

2. Engrenage réducteur (10) selon la revendication 1, **caractérisé en ce qu'**une touche de désencliquetage (54) est prévue sur le couvercle de boîtier (46) afin de désaccoupler la roue dentée (F) en prise avec l'autoblocage.

3. Engrenage réducteur (10) selon la revendication 1 ou 2, **caractérisé en ce que** les modules d'engrenage (12, 14) sont interchangeables, notamment différents engrenages secondaires (14) peuvent être utilisés pour le même engrenage primaire (12).

4. Engrenage réducteur (10) selon l'une quelconque des revendications 1 à 3, **caractérisé en ce que** l'autoblocage (16) est réalisé sous forme d'embrayage à friction.

5. Engrenage réducteur (10) selon l'une quelconque des revendications 1 à 4, **caractérisé en ce que** l'autoblocage (16) est réalisé sous forme d'embrayage à friction, d'embrayage magnétique ou sous forme d'un autre embrayage de frein.

6. Engrenage réducteur (10) selon l'une quelconque des revendications 1 à 5, **caractérisé en ce que** l'autoblocage (16) présente une surface de friction extérieure (68) avec un grand rayon (R) et une surface de friction intérieure (70) avec un petit rayon (r), de sorte que différentes valeurs de résistance à un couple puissent être ajustées avec le même dispositif d'autoblocage.

7. Engrenage réducteur (10) selon la revendication 6, **caractérisé en ce que** la roue dentée (F) en prise avec l'autoblocage (16) est un pignon droit et **en ce que** la surface de friction extérieure (68) est réalisée sur le pignon droit (F) de l'engrenage primaire (12), et la surface de friction intérieure (70) est réalisée sur une partie de boîtier (60), ou inversement.

8. Engrenage réducteur (10) selon l'une quelconque des revendications 1 à 7, **caractérisé en ce que** l'autoblocage (16) est réalisé sous forme d'embrayage commutable.

9. Engrenage réducteur (10) selon les revendications 6 et 8, **caractérisé en ce que** l'autoblocage (16) peut être bloqué dans la région de la surface de friction intérieure (70) avec une came de commutation saillante (80).

10. Engrenage réducteur (10) selon les revendications 6 et 8, **caractérisé en ce que** la roue dentée (F) en prise avec l'autoblocage (16) est un pignon droit qui est connecté fixement à l'autoblocage (16), **en ce que** le pignon droit (F) comprend un axe longitudinal (L1) et **en ce qu'**une partie de boîtier (60) forme la surface de friction extérieure annulaire (68) avec le grand rayon (R) et un boulon de levage (88) réglable dans la direction de l'axe longitudinal (L1) du pignon droit (F) forme la surface de friction intérieure (70).

11. Engrenage réducteur (10) selon la revendication 7 ou 10, **caractérisé en ce que** l'autoblocage (16) comprend un ressort de blocage (18) rigide en rotation, pouvant être serré dans la direction de l'axe longitudinal (L1) du pignon droit (F), qui est réalisé de préférence sous forme de ressort de compression conique, de ressort à boudin ou de ressort à lame.

12. Engrenage réducteur (10) selon l'une quelconque des revendications 1 à 11, **caractérisé en ce qu'**un potentiomètre (52) pour un signal de retour peut être intégré par le biais d'un pignon droit (48) avec un arbre (50) dans un pignon de la dernière roue dentée (B) dans la direction de la prise de force (36).

13. Engrenage réducteur (10) selon l'une quelconque des revendications 1 à 12, **caractérisé en ce que** le moteur d'entraînement (20) est réalisé sous forme de moteur à courant continu, de moteur à courant alternatif sans balais, de moteur à courant alternatif sans capteur ou de moteur synchrone.

14. Engrenage réducteur (10) selon l'une quelconque des revendications 1 à 13, **caractérisé en ce que**, dans l'optique de la sécurité de fonctionnement, un accumulateur d'énergie (40), de préférence un ressort mécanique, une batterie ou un condensateur, est intégré dans le boîtier (46) de l'engrenage primaire (12).

15. Engrenage réducteur (10) selon l'une quelconque des revendications 1 à 14, **caractérisé en ce que** l'engrenage secondaire (14) est accouplé à un arbre creux (30) pour l'entraînement d'un clapet, d'un robinet à boisseau sphérique ou d'un moteur linéaire pour une soupape de levage (94), notamment une soupape conique.
